# EUROPEAN PATENT APPLICATION

(11) **EP 1 555 622 A1**
(43) Date of publication of application: **20.07.2005**
(21) Application number: 04000857.5
(22) Date of filing: 16.01.2004
(51) Int. Cl.: G06F 17/21, G06F 17/27

(54) **System and method for the dynamic display of text**

(71) Applicant: Sony International (Europe) GmbH, 10785 Berlin (DE)
(72) Inventor: Möhler, Gregor, c/o Stuttgart Tech. Center, 70327 Stuttgart (DE); Osen, Martin, c/o Stuttgart Tech. Center, 70327 Stuttgart (DE)
(74) Representative: Körber, Martin, Dipl.-Phys.

(57) **Abstract**

The present invention proposes a system 1 for the dynamic display of text, with receiving means 2 for receiving input text, analysing means 3 for linguistically analysing received input text by determining its linguistic properties, rendering means 4 for rendering the dynamic behaviour of the input text on the basis of a graphical scheme 7 and the determined linguistic properties and display means 6 for dynamically displaying the input text with the rendered dynamic behaviour. The present invention also relates to a corresponding method for the dynamic display of the text.

The present invention enables the automatic real time display of dynamic text independent from the kind and format of the input text.

## Description

The present invention relates to a system and a method for the dynamic display of text.

Generally, kinetic typography, i.e. text that uses movement or other temporal change, has recently emerged as a new form of communication, which can bring some of the expressive power of film, such as its ability to convey emotion, portrait characters and visually attract attention, to the strong communicative properties of text. Today, the use of dynamic text can be seen in applications like animated websites, commercials and film introductions. In these cases a fixed text is generated in an extensive design process using animation tools like Macromedia Flash or discreet inferno, that give the designer a fine control of the basic properties of the text as displayed on a display, such as the x- and y- position, the scale and the viewing angle. Some animated websites enable an interactive generation of dynamic text, for examples with tools based on Macromedia Flash or Macromedia Director. In all these cases, a user knowing the fixed text has to precisely define the dynamic properties of the text to be displayed before the text can actually be seen on a display. In other words, the user has to strictly link the wanted dynamic behaviour of the known text to the elements of the text itself before the text can be dynamically displayed.

In Johnny C. Lee, Jodi Forlizzi and Scott E. Hudson "The kinetic typography engine: an extensible system for animating expressive text", proceedings of the 15th annual ACM symposium on User interface software and technology, Paris, 2002, text animations are modelled by a combination of mathematical functions (like parabolic functions) that drive the basic properties of the text (x, y, scale, angle and the like). Also, it is described how to combine different behaviours to a so-called composite effect. However, the dynamic display of the text always bases upon the knowledge of the text by the user who has to manually input and determine the dynamic behaviour.

The object of the present invention is therefore to provide a system and a method for the dynamic display of text in which the dynamic display of any unknown input text, i.e. input text of any type or kind which is not known by the dynamic text processing system, is enabled.

The above object is achieved by a system and a method for the dynamic display of text as defined in claims 1 and 14, respectively.
The system for the dynamic display of text according to the present invention comprises receiving means for receiving input text, analysing means for linguistically analysing received input text by determining its linguistic properties, rendering means for rendering the dynamic behaviour of the input text on the basis of a graphical scheme and the determined linguistic properties, and display means for dynamically displaying the input text with the rendered dynamic behaviour.

The method for the dynamic display of text according to the present invention comprises the steps of receiving input text, linguistically analysing received input text by determining its linguistic properties, rendering the dynamic behaviour of the input text on the basis of a graphical scheme and the determined linguistic properties, and dynamically displaying the input text with the rendered dynamic behaviour.

Hereby, by linguistically analysing received input text by determining its linguistic properties, the system and the method according to the present invention enable the dynamic display of any type or kind of text which is previously unknown. The (automatic) rendering of the dynamic behaviour of the input text on the basis of a graphical scheme and the determined linguistic properties enables an automatic processing and dynamic display of the input text without the necessity of specific user inputs beforehand.

Generally, the present invention describes a user interface in which the linguistic properties of a text are mapped in real time or almost real time, to form a dynamic text. The behaviour of the dynamic text is described in a graphical scheme that creates the low level graphical output for the dynamic text rendering.

A main aspect of the present invention is that there is no restriction as to the type and kind of the input text. That means that the system is flexible to process and adequately display any given input text as it is entered into the system. This has consequences both for the linguistic analysis and for the rendering of the dynamic text output, which also must be able to deal with any kind of text. It also means that the system including all algorithms involved must run in real time or at least almost in real time.

Another main aspect of the invention is that the animations of the output text can be used to add additional content or meaning to the text, which is not possible in the text itself. Hereby, the additional content may serve to disambiguate an ambiguous text, to clarify the author's intention or to visualise the emotional content of user and/or text. The present invention is hereby able to evoke the different additional meanings by graphical means using different animation schemes of the output text depending on the determined linguistic properties and on optional additional user inputs, such as automatically detected user parameters or explicit user input.

The method for the dynamic display of text can be implemented by computer software which is able to perform the methods steps if implemented on a computer. Also, some of the components (means) of the system according to the present invention can be implemented as computer software.

Additional advantageous features are defined in the respective additional sub-claims.

The analysing means advantageously determines the phrasing of the text, topic words and/or the rhythmic structure of the text as the linguistic properties for analysing the received input text. By automatically deriving these main linguistic properties, the internal meaning of the text and the attention of the author of the text or the reader of the text can be determined in an effective way. Hereby, the analysing means advantageously determines the phrasing of a text by means of a phrasing algorithm which separates an input text into phrases comprising words relating to each other. The phrasing algorithm advantageously comprises a linguistic part delivering minimal phrases. The graphical scheme used by rendering means then concatenates or assembles the minimal phrases into lines in order to obtain lines with a similar line length and displays the lines. Further, the analysing means advantageously determines topic words on the basis of a topic detection algorithm which identifies important words enabling a user reading the displayed text to follow the topic of the text. Further, the analysing means advantageously determines the rhythmic structure of the text on the basis of a linguistic duration model which calculates a based duration for every word of the text based on its length, its status and/or its position.

Further, advantageously, the user input means is provided for receiving user input information for changing the dynamic behaviour of the input text. Hereby, the user input means advantageously detects user or text related parameters for changing the dynamic behaviour of the text. Alternatively, or additionally, the user input means advantageously detects a user input with information for changing the dynamic behaviour of the text. Hereby, the user input means advantageously enables a user to directly change the internal structure of the graphical scheme used by the rendering means. Thus, a number of different input methods can be used to get additional user input in order to interactively change the behaviours of the dynamic text output.

Further, advantageously, the graphical scheme used by the rendering means comprises dynamic behaviours for particular text elements. Hereby, the dynamic behaviours advantageously are defined as trajectories of the basic graphical properties, e.g. position in x- or y-axis, scale; display angle, rotation and/or skew. Hereby, the dynamic behaviours advantageously are defined on the basis of a physical model defining rules of how a particular text element moves within the scene.

Preferred embodiments of the present invention are explained in the following description in relation to the enclosed drawings, in which
Fig. 1 shows a schematic diagram of a system for the dynamic display of text according to the present invention, and
Fig. 2 shows different phases of the dynamic display of text according to the present invention.

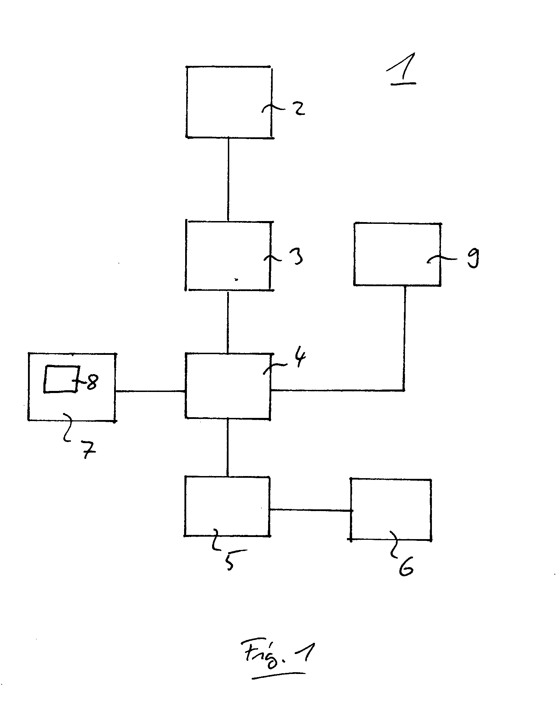

Fig. 1 shows a schematic block diagram of a system 1 for dynamic display of text according to the present invention. The system 1 shown in Fig. 1 is also adapted to perform the method for the dynamic display of text according to the present invention and implements all necessary elements in order to achieve this goal. The method for the dynamic display of text according to the present invention can for example be implemented by means of computer software program, which performs the required method steps if implemented on a computer or any other suited processing device.

The system 1 for the dynamic display of text is shown in Fig. 1 comprises a receiving means 2 for receiving input text, analysing means 3 for linguistically analysing received input text by determining its linguistic properties, rendering means 4 for rendering the dynamic behaviour of the input text on the basis of a graphical scheme 7 and the determined linguistic properties, and display means 6 for dynamically displaying the input text with the rendered dynamic behaviour.

Hereby, the system 1 can, for example, be a computer system, a service system or any other suitable device combining hardware and software elements enabling the processing of received input text into a dynamic display of output according to the present invention.

The input text that enters the system 1 through the receiving means 2 can come from any source including typed, hand-written or spoken input from a user or from any other information service. In case of spoken and hand-written input, the input has to be processed by an automatic recognition system which converts the input into text information. In case of typed input, the processing is not necessary. However, in certain applications the processing of typed input into a text format readable by the receiving means 2 might be necessary. A main aspect is that the receiving means 2 is adapted to receive any kind and any format of input text. In other words, the input text which can be received by the receiving means 2 is unrestricted.

The input text received by the receiving means 2 is supplied to the analysing means 3 which determines the linguistic properties of the input text. The analysing means 3 hereby determines at least the main linguistic properties of the text, which are the phrasing of the text stream, topic words in the text and the rhythmic structure of the text stream. These main linguistic properties are derived automatically from the text using a linguistic analysis.

The phrasing algorithm used by the analysing means 3 to determine the phrasing of the text stream separates or chunks each input sentence into phrases. Linguistic knowledge is used to achieve an easily readable output in which words that relate to each other stay together in one phrase. Hereby, compound nouns, verbs consisting of separate parts and other composite expressions will stay together and will be displayed with the same kind of dynamic display in order to support and simplify the understanding thereof. For example, one phrase will later be displayed on the display means 6 in the same line. For example, compound nouns, like "street lamp" and verbal expressions like "are going" will not be separated by the phrasing algorithm. In practice, it might be advantageous to split the phrasing algorithm into a pure linguistic part which delivers the phrases as just, and a graphical part that assembles the minimal phrases into lines of similar length and displays the lines. The linguistic part is processed within the linguistic analysis by the analysing means 3 and the graphical part within the graphical scheme algorithm used in the rendering means 4 as described further below. However, this is only one of several possible embodiments of the phrasing algorithm.

Further, the analysing means 3 determines topic words on the basis of a topic detection algorithm identifying important words which allow a user to follow the topic of a text. Hereby, the topic words are marked and correspondingly displayed in the dynamic display either on the basis of a binary topic/no-topic distinction in which topic words are dynamically displayed in a certain way and no-topic words not or a gradual value, which signifies that a word can have several degrees of dynamic display varying between not important and very important.

The rhythmic structure and the rhythmic properties of the input text are determined by the analysing means 3 on the basis of a linguistic duration model. This model calculates a base duration for every word based on its length, its status (for example topic word or no-topic word) its position in a phrase and other linguistic features derived from the text. In case that the input text bases on a speech input, the recognition system converting the speech information into text information may also recognise the rhythmic structure of the text and forward this information to the receiving means 2 and the analysing means 3, where it can be used as described.

On the lowest level the text elements are animated using trajectories of their graphical properties, such as the position in the x- or y- axes, the scale, the display angle, the rotation and/or the skew. The words of the currently displayed phrase together with the still visible words of the past phrases make up the scene. This mechanism is independent of the actual rendering engine used in the rendering means 4, which might be based on two or three dimensions.

On a more abstract level the text is animated and dynamically displayed using the linguistic properties determined in the analysing means 3 and graphical scheme 7 by the rendering means 4. The graphical scheme 7 can for example be provided from the memory means or any other suitable means being provided in the system 1. The basic elements of the graphical scheme 7 are the behaviours 8, i.e. animation or dynamic display behaviours that a particular textual element such as a word, a phrase and the like will exhibit in the dynamic display on display means 6. The behaviours 8 are part of the graphical scheme 7 and stored within as shown in Fig. 1. Alternatively, the behaviour 8 may be stored external to the graphical scheme 7 within the system 1. The behaviours 8 are represented by a particular animation defined on a lower graphical level described above. The behaviours may either be defined as trajectories of the basic graphic properties or using a physical model. In case of the physical model, a particular textual element such as a word, a phrase, and the like moves within the scene on a display means 6 according to the rules of the physical model. In this way, words, phrases etc. may for example clash against each other, and then move according to the forces of the stroke or they may move following a particular virtual gravity field. The physical model may or may not strictly use physical laws. It may only use a subset of a real physical model or it may deviate from the real physical laws to follow certain animation principles.

The system 1 can additionally comprise, as shown in Fig. 1, a user input means 9 for detecting a user input with information for changing the dynamic behaviour of the input text. The user input means 9 is hereby connected to the rendering means 4 and delivers additional information to the rendering means 4 for rendering the dynamic behaviour of the input text. In one possible embodiment, the user input means detects user or text related parameters. For example, the user input means can detect the emotional state of the user, for example, by detecting biosensorical data of the user. Text related parameters can, for example, be detected if the input text bases on a speech input and emotional parameters can be detected from the speech information. Additionally or alternatively, the user input means is adapted to detect a user input with additional information for changing the dynamic behaviour of the text. Hereby, the user can for example directly input additional information. For example, the user input means 9 can hereby comprise a key-board, a pen-gesture detector, a hand-gesture detector and/or a speech input detector for detecting the additionally input information. The additional information can for example be a marking of words that have special importance to the user (emphasis), the indication of an emotional category of the text or parts of the text, the indication of the emotional state of the user, the indication of the intention of the user in relation to the text, the reading speed and other features that describe the personality of the user. For example, emphasis can be used to highlight the accentuation as it is done in speech. Another example is to adjust the reading speech which can be done via as slider, a jog-dial device or the like. In a more advanced version of the user input 9, the user can directly manipulate the internal structure of the behaviours 8 of the graphical scheme 7, for example, by manipulating the physical model which is incorporated in the graphical scheme 7. Hereby, the additional input by the user are for example high-level parameters which are easy to handle by the user, such as modelling the different physical behaviours of words using different physical materials.

As stated above, the animation and the dynamic behaviours 8 differ for different input text and for different information retrieved by the user input means 9. Hereby, the behaviours 8 can vary on the basis of binary or gradual parameters. That means, that the behaviours 8 can vary in a binary way (on/off) or in a gradual way depending on the linguistic properties determined in an analysing means 3 and - if available - depending on additional information retrieved by the user input means 9. Hereby, the determined linguistic properties and the additional user input information is used by the rendering means 4 to determine the corresponding graphical scheme 7 containing the respective behaviours 8. For example, depending on word classes like topic words, the strength of the emphasis and different classes of additional user input information, like emotion categories, a different graphical scheme 7 is chosen by the rendering means 4. The input text together with the graphical scheme information and the related behaviours 8 are then supplied from the rendering means 4 to a graphical engine 5 which drives and controls the display of the text on a display means 6 with the dynamic properties as determined by the graphical scheme 7 and the behaviours 8 related to the specific input text. The display means 6 is for example a computer screen, a TV-screen, a PDA screen, mobile phone screen or the like.

For example, in one realisation of the behaviour, words that are linguistically marked by the analysing means 3 as topic words will stay longer on the display means 6 than other words. This enables the user to get an overview over the passed text just by scanning the topic words which continue to be visible longer than non-topic words. This refunction can be very useful for example in case of an on-line message exchange application in which a user needs to be able to trace back the passed conversation.

In another realisation of behaviour, words that are marked as emphasised words by a direct user input through the user input means 9 will be realised more prominently than non-emphasised words on the display means 6. Whereas, non-emphasised words would be displayed with a subtle realisation of an emotional category, the emphasised words would clearly stand out and strongly show the emotional category.

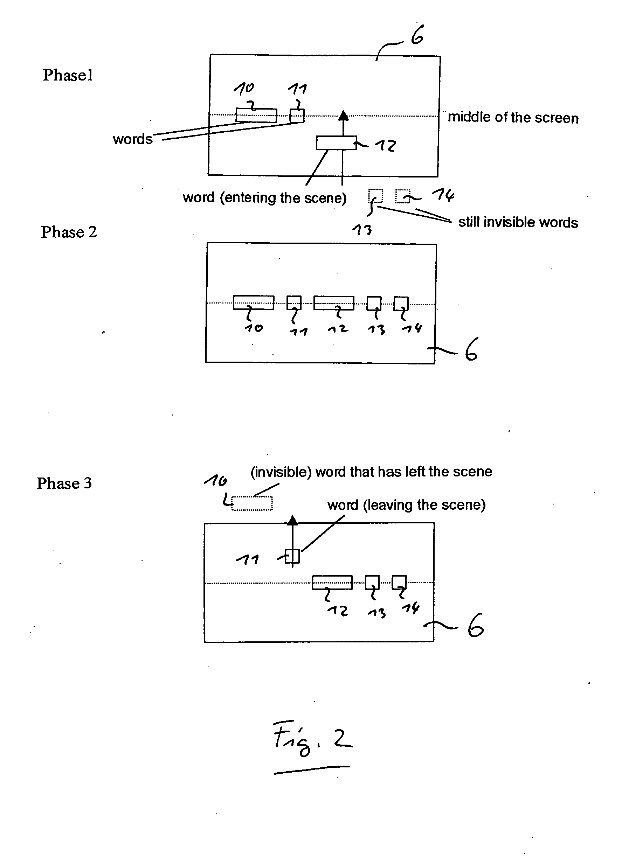

The graphical scheme 7 ensures to any given text will be displayed appropriately on the display means 6. The scheme for example takes care that all text is displayed within the boundaries of the display means 6. Each graphical scheme is divided in a first phase in which the words of a particular phrase are entering the scene on the display means 6, the second phase in which the full phrase is visible and can be read in the whole and the final phase in which words leave the scene. Different graphical schemes can be defined. As an example, a particular graphical scheme defines that words enter the display means 6 from below the display (phase 1), line up in the middle of the screen on one horizontal line (phase 2) and depart to the top of the display means 6 of phase 3. Fig. 2 illustrates the three different phases of this example.

As shown in Fig. 2, in phase 1 the words are entering the scene from below the display means 6. As shown in Fig. 2, the words 10 and 11 are already aligned on the line on the middle of the display means 6, word 12 has already entered the scene and is moving upwards towards the middle line, whereas words 13 and 14 are not yet visible. In phase 2, all words 10, 11, 12, 13 and 14 of the phrase are displayed aligned on the middle line of the display means 6. Phase 2 is actually the phase in which the user can read the phrase as a whole. In phase 3, word 10 already has left the scene and is not longer visible, word 11 is moving upwards towards the upper boundary of the display means 6 and the words 12, 13, and 14 are still displayed on the middle line.

As a result of the phrasing algorithm applied by the analysing means 3, the minimal phrases provided by the linguistic analysis are shown in lines of similar length. For example, the words 10, 11, 12, 13 and 14 as shown in Fig. 2 may be such a phrase. This part of the phrasing algorithm therefore depends on the graphical properties like font size, font type, screen size and so forth.

The rhythmical structure of the text as determined by the linguistic analysis in the rendering means 4 is mapped to various timings within the graphical scheme. In one realisation the linguistic word duration is mapped to the time shift between the occurrence of words in phase 1.

If the reading speech is one additionally user input parameter input via the user input means 9, this parameter can be applied to the timing of the graphical scheme as well. In one realisation the reading speed is mapped to the duration of phase 2, such that for example for a lower speed the full phrase is visible longer before it disappears.

Additionally, the graphical schemes 7 also may contain a style guide. The basic principle of the style guide is to animate as little as possible and as much as necessary in order to achieve a specific effect, like conveying a particularly emotion. The goal is to achieve an output that is consistent over different behaviours. Among other rules it contains limits for particular changes of basic graphical properties.

Possible applications of the system 1 and the method for the dynamic display of text according to the present invention lie in the area of text based applications. They range from interactive messaging systems to non-interactive applications. Interactive message systems like a chat-room in the Internet, are usually characterised by an instant exchange of messages from different users. Among non-interactive applications are text base information services, notes (electronic post-its) and new kind of lyrics (like electronic variations of concrete poetry) or novels, especially designed for dynamic texts. Also, short message systems for the exchange of text messages between mobile devices can be another application of the subject invention.

## Claims

1. System (1) for the dynamic display of text, with
receiving means (2) for receiving input text,
analysing means (3) for linguistically analysing received input text by determining its linguistic properties,
rendering means (4) for rendering the dynamic behaviour of the input text on the basis of a graphical scheme (7) and the determined linguistic properties,
display means (6) for dynamically displaying the input text with the rendered dynamic behaviour.

2. System (1) for the dynamic display of text according to claim 1,
**characterised in,**
**that** the analysing means (3) determines the phrasing of text, topic words and/or the rhythmic structure of the text as the linguistic properties for analysing the received input text.

3. System (2) for the dynamic display of text according to claim 2,
**characterised in,**
**that** the analysing means (3) determines the phrasing of a text by means of a phrasing algorithm which separates an input text into phrases comprising words relating to each other.

4. System (3) for the dynamic display of text according to claim 3,
**characterised in,**
**that** the phrasing algorithm comprises a linguistic part delivering minimal phrases, whereby the graphical scheme (7) used by the rendering means (4) assembles the minimal phrases into lines of similar length.

5. System (4) for the dynamic display of text according to claim 2, 3 or 4,
**characterised in,**
**that** the analysing means (3) determines topic words on the basis of a topic detection algorithm identifying important words enabling to follow the topic of a text.

6. System (5) for the dynamic display of text according to claim 2, 3 or 4,
**characterised in,**
**that** the analysing means (3) determines the rhythmic structure of the text on the basis of a linguistic duration model which calculates a base duration for every word of the text based on its length, its status and/or its position.

7. System (6) for the dynamic display of text according to one of the claims 1 to 6,
**characterised by**
a user input means (9) for receiving user input information for changing the dynamic behaviour of the input text.

8. System (7) for the dynamic display of text according to claim 7,
**characterised in,**
**that** the user input means (9) detects user or text related parameters for changing the dynamic behaviour of the text.

9. System (8) for the dynamic display of text according to claim 7 or 8,
**characterised in,**
**that** the user input means (9) detects a user input with information for changing the dynamic behaviour of the text.

10. System (9) for the dynamic display of text according to claim 9,
**characterised in,**
**that** the user input means (9) enables a user to directly change the internal structure of the graphical scheme used by the rendering means.

11. System (10) for the dynamic display of text according to one of the claims 1 to 10,
**characterised in,**
**that** the graphical scheme (7) used by the rendering means comprises dynamic behaviours (8) for particular text elements.

12. System (11) for the dynamic display of text according to claim 11,
**characterised in,**
**that** the dynamic behaviours (8) are defined as trajectories of the basic graphical properties.

13. System (12) for the dynamic display of text according to claim 11,
**characterised in,**
**that** the dynamic behaviours (8) are defined on the basis of a physical model defining rules of how a particular text element moves within the scene.

14. Method for the dynamic display of text, with the steps of
receiving input text,
linguistically analysing received input text by determining its linguistic properties, rendering the dynamic behaviour of the input text on the basis of a graphical scheme and the determined linguistic properties,
dynamically displaying the input text with the rendered dynamic behaviour.

15. Method for the dynamic display of text according to claim 14,
**characterised in,**
**that** in the analysing step the phrasing of text, topic words and/or the rhythmic structure of the text are determined as the linguistic properties of the received input text.

16. Method for the dynamic display of text according to claim 15,
**characterised in,**
**that** in the analysing step the phrasing of a text is determined by means of a phrasing algorithm which separates an input text into phrases comprising words relating to each other.

17. Method for the dynamic display of text according to claim 16,
**characterised in,**
**that** the phrasing algorithm comprises a linguistic part delivering minimal phrases, whereby the graphical scheme used by the rendering means assembles the minimal phrases into lines of similar length.

18. Method for the dynamic display of text according to claim 15, 16 or 17,
**characterised in,**
**that** in the analysing step topic words are determined on the basis of a topic detection algorithm identifying important words enabling to follow the topic of a text.

19. Method for the dynamic display of text according to claim 15, 16 or 17,
**characterised in,**
**that** in the analysing step the rhythmic structure of the text is determined on the basis of a linguistic duration model which calculates a base duration for every word of the text based on its length, its status and/or its position.

20. Method for the dynamic display of text according to one of the claims 14 to 19,
**characterised by**
the further step of receiving user input information for changing the dynamic behaviour of the input text.

21. Method for the dynamic display of text according to claim 20,
**characterised in,**
**that** as the user input information user or text related parameters are detected for changing the dynamic behaviour of the text.

22. Method for the dynamic display of text according to claim 20 or 21,
**characterised in,**
**that** as the user input information a user input with information for changing the dynamic behaviour of the text is detected.

23. Method for the dynamic display of text according to claim 22,
**characterised by**
enabling a user to directly change the internal structure of the graphical scheme used by the rendering means.

24. Method for the dynamic display of text according to one of the claims 14 to 23,
**characterised in,**
**that** the graphical scheme used by in the rendering step comprises dynamic behaviours for particular text elements.

25. Method for the dynamic display of text according to claim 24,
**characterised in,**
**that** the dynamic behaviours are defined as trajectories of the basic graphical properties.

26. Method for the dynamic display of text according to claim 24,
**characterised in,**
**that** the dynamic behaviours are defined on the basis of a physical model defining rules of how a particular text element moves within the scene.

27. Computer software for the dynamic display of text, which is able to perform the method according to one of the steps 14 to 26 if implemented on a computer.
